# FASCICULE DE BREVET EUROPEEN

(11) **EP 2 435 381 B1**
(45) Date de publication et mention de la délivrance du brevet: **14.12.2016**
(21) Numéro de dépôt: 10726206.5
(22) Date de dépôt: 18.05.2010
(51) Int. Cl.: C04B 28/14, C04B 24/26, B01F 17/34

(54) **UTILISATION D'UN POLYMÈRE PEIGNE (MÉTH)ACRYLIQUE CONTENANT UN ESTER (MÉTH)ACRYLIQUE COMME AGENT DISPERSANT ET ANTI-DÉMOUSSANT DANS UNE SUSPENSION AQUEUSE DE SULFATE DE CALCIUM HÉMIHYDRATÉ**
VERWENDUNG EINES (METH)ACRYL KAMMPOLYMERS ENTHALTEND (METH)ACRYLSÄUREESTER ALS DISPERGIERMITTEL UND ALS ANTI-ENTSCHÄUMER IN EINER WÄSSERIGEN SUSPENSION VON CALCIUMSULFAT-HEMIHYDRAT
USE OF A (METH)ACRYLIC COMB POLYMER CONTAINIG (METH)ACRYLIC ESTER AS DISPERSING AGENT AND ANTI-DEFOAMING AGENT IN AN AQUEOUS SUSPENSION OF CALCIUM SULFATE HEMIHYDRATE

(30) Priorité: 28.05.2009 FR 0953525
(43) Date de publication de la demande: 04.04.2012
(73) Titulaire: COATEX, 69730 Genay (FR)
(72) Inventeur: SUAU, Jean-Marc, F-69480 Lucenay (FR); KENSICHER, Yves, F-69620 Theize (FR)
(74) Mandataire: Balmefrezol, Ludovic Francis Pierre
(86) Numéro de dépôt international: PCT/IB2010/001187
(87) Numéro de publication internationale: WO 2010/136867

(56) Documents cités:
- FR-A1- 2 900 930
- US-A1- 2004 209 979
- US-B1- 6 264 739
- US-B1- 7 232 875

## Description

La présente invention concerne le secteur des additifs mis en oeuvre pour diminuer la teneur en eau et augmenter la quantité de mousse dans une suspension aqueuse de sulfate de calcium hémihydraté, destinée à la fabrication de plaques de plâtre.

La première étape de la fabrication de plaques de plâtre réside dans la fabrication d'une suspension aqueuse de sulfate de calcium hémihydraté. Concrètement, l'hémihydrate sous forme de poudre est introduit dans l'eau, sous agitation dans un mélangeur et en présence d'un agent dispersant. Il s'hydrate au contact de l'eau, formant du dihydrate de sulfate de calcium, c'est à dire du gypse.

La fonction de l'agent dispersant est d'assurer au sulfate de calcium hémihydraté un état de dispersion homogène dans la phase aqueuse; son efficacité peut notamment se mesurer à la quantité de sulfate de calcium hémihydraté dispersable en vue d'obtenir une rhéologie donnée (ou valeur de viscosité). On parle souvent de manière indistincte d'agent «dispersant», « réducteur d'eau », « plastifiant » ou améliorant la « consistance » ou la « fluidité » de la suspension de gypse.

Divers additifs sont ajoutés en parallèle dans la suspension aqueuse, comme des agents collants, des accélérateurs, etc.... Elle est ensuite mélangée à de la mousse issue d'un générateur (de l'eau est injectée dans une turbine en présence d'agent moussant), puis prise en sandwich entre 2 bandes de papier déroulantes. L'ensemble est enfin découpé aux dimensions des plaques de plâtre souhaitées. Au sujet de la fabrication de telles plaques, on pourra se reporter aux documents US 5 879 446 et Kirk-Othmer Encyclopedia of Chemical Technology (Second Edition 1970, vol 21, pp. 621-24, et fourth edition 1992, vol 4, pp. 618-619).

Le mélange entre la suspension de sulfate de calcium hémihydraté et la mousse ne dure que quelques secondes. Mais, comme la structure de la mousse est particulièrement sensible aux agitations du milieu, elle est souvent dégradée au cours de cette étape. Une telle dégradation conduit à la formation de grosses bulles qui affectent l'adhésion de la suspension de sulfate de calcium hémihydraté aux bandes de papier ; il faut donc surdoser la quantité d'agent moussant -ce qui diminue d'autant la productivité du procédé-, pour obtenir la quantité de mousse souhaitée. Cette problématique est clairement relatée dans les documents JP 08-217505 et US 6 264 739.

La mousse est également sensible à la nature de l'agent dispersant. L'homme du métier mettait initialement en oeuvre des produits du type lignosulfonates et naphtalène-sulfonate mais leur efficacité dispersante s'est rapidement avérée insuffisante. Il a ensuite mis au point des dispersants dits « peigne », constitués d'un squelette (méth)acrylique sur lequel sont greffées des chaînes latérales alcoxy ou hydroxy polyalkylène glycol.

On trouve des exemples de tels dispersants dans les brevets JP 08-217505 et US 6 264 739 déjà cités. Ces documents abordent la question des interactions entre la mousse et l'agent dispersant, à travers des tests basés sur le mélange de mousse et d'une suspension de sulfate de calcium hémihydraté contenant un dispersant. Ce mélange est réalisé sous agitation pendant un quart d'heure. Il s'agit donc d'un mélange « intime » entre les constituants, réalisé pendant un temps très long par rapport aux quelques secondes lorsqu'on opère à échelle industrielle.

Les résultats obtenus selon ces 2 brevets tendraient à démontrer que les dispersants du type naphtalène-sulfonate sont beaucoup plus destructeurs de mousse que leurs homologues de type peignes. Or, la structure de la mousse est altérée par la nature-même du procédé mis en oeuvre : les quinze minutes de mélange déstructurent nécessairement la mousse, et on est en droit de s'interroger sur le caractère représentatif des résultats obtenus.

Pour supporter de telles allégations, la Demanderesse a démontré que, dans des conditions bien plus proches de la réalité, les dispersants peignes conduisaient à une réduction de la mousse plus marquée que pour les produits du type naphtalène sulfonate. Ces résultats ont été obtenus grâce à des tests reproduisant au plus proche la réalité industrielle et font l'objet d'une description très précise dans les exemples illustrant la présente Demande.

Poursuivant ses recherches dans le domaine des polymères peignes utilisés pour les suspensions aqueuses moussées de sulfate de calcium hémihydraté, la Demanderesse est parvenue à démontrer que l'ajout d'un termonomère à base d'ester d'acide (méth)acrylique conduisait à un pouvoir anti-démoussant amélioré, sans altérer l'efficacité dispersante de tels polymères. L'expression « pouvoir anti-démoussant » ne signifie pas que ledit polymère est générateur de mousse mais que, en présence de mousse, son interaction est limitée avec celle-ci : il ne déstructure pas ou peu ladite mousse.

Si les documents précédents suggéraient, parmi de très nombreuses variantes, qu'un tel monomère pouvait être utilisé dans la fabrication de dispersants peignes, ils ne contenaient aucun exemple supportant une telle possibilité. De plus, ils ne fournissaient aucun enseignement sur le rôle qu'un ester pouvait jouer à l'égard de la mousse, cet ester étant copolymérisé avec les autres monomères du dispersant peigne.

De manière tout à fait surprenante, les tests réalisés par la Demanderesse, dans des conditions bien plus proches de la réalité que celles décrites dans les documents JP 08-217505 et US 6 264 739, démontrent sans ambigüité l'avantage que procure un ester de l'acide (méth)acrylique, s'il est mis en oeuvre dans la synthèse des polymères peignes de l'art antérieur : non seulement l'efficacité dispersante du polymère résultant n'est pas altérée, mais son pouvoir anti-démoussant est amélioré.

Aussi, un premier objet de l'invention réside dans l'utilisation, dans une suspension aqueuse moussée de sulfate de calcium hémihydraté, comme agent dispersant et anti-démoussant, d'un polymère peigne caractérisé en ce qu'il est constitué :
a) d'au moins un monomère qui est l'acide (méth)acrylique,
b) d'au moins un monomère qui est un ester de l'acide (méth)acrylique,
c) d'au moins un monomère qui est un alcoxy ou un hydroxy polyalkylène glycol.

L'expression « suspension aqueuse moussée de sulfate de calcium hémihydraté » signifie que la fonction anti-démoussante du polymère selon l'invention, ne s'exprime que dès l'instant où la mousse est mise au contact de ladite suspension aqueuse.

En outre, la Demanderesse ajoute que la fabrication de tels polymères est bien connue de l'homme du métier, notamment dans un procédé en continu, en semi-continu ou en batch. Des exemples de tels procédés figurent dans les documents US 6 815 513, US 6 214 958, US 6 64 360 et US 7 232 875. Des compositions contenant des polymères peignes sont connus de FR 29000930 et US 2004/020 9979.

Cette utilisation est aussi caractérisée en ce que ledit polymère peigne est constitué, exprimé en pourcentage en poids de chacun de ses constituants, le total étant égal à 100%:
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique,
c) de 70 % à 90 %, préférentiellement de 75 % à 85 % d'au moins un monomère qui est un alcoxy ou un hydroxy polyalkylène glycol,
la somme des pourcentages a), b) et c) étant égale à 100 %.

Cette utilisation est aussi caractérisée en ce que le monomère a) est préférentiellement l'acide méthacrylique.

Cette utilisation est aussi caractérisée en ce que le monomère b) est préférentiellement choisi parmi l'acrylate d'éthyle, l'acrylate de butyle et le méthacrylate de méthyle.

Cette utilisation est aussi caractérisée en ce que le monomère c) est un monomère de fomule (I) :

R-(A-O)ₘ-(B-O)ₙ-R' (I)

- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

Les structures -(A-O)ₘ-(B-O)ₙ- désignent aussi bien des structures blocs que statistiques et ce, dans toute la présente Demande.

Cette utilisation est aussi caractérisée en ce que ledit polymère est obtenu par polymérisation radicalaire en solution, en émulsion directe ou inverse, en suspension ou précipitation dans des solvants, en présence de systèmes catalytiques et d'agents de transfert, ou encore en une polymérisation radicalaire contrôlée et préférentiellement en la polymérisation contrôlée par des nitroxydes (NMP) ou par des cobaloxymes, en la polymérisation par transfert d'atome radicalaire (ATRP), en la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit polymère est totalement ou partiellement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les aminés primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi la triéthanolamine et l'hydroxyde de sodium.

Cette utilisation est aussi caractérisée en ce que ledit polymère est séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Cette utilisation est aussi caractérisée en ce que la suspension aqueuse moussée de sulfate de calcium hémihydraté contient, exprimé en pourcentage en poids sec de polymère par rapport au poids sec de sulfate de calcium hémihydraté, de 0,005 % à 0,5 %, préférentiellement de 0,02 % à 0,35 % dudit polymère.

Un autre objet de l'invention réside dans une suspension aqueuse moussée de sulfate de calcium hémihydraté, contenant un polymère peigne caractérisé en ce qu'il est constitué :
a) d'au moins un monomère qui est l'acide (méth)acrylique,
b) d'au moins un monomère qui est un ester de l'acide (méth)acrylique,
c) d'au moins un monomère qui est un alcoxy ou un hydroxy polyalkylène glycol.

Cette suspension aqueuse est aussi caractérisée en ce que ledit polymère peigne est constitué, exprimé en pourcentage en poids de chacun de ses constituants, le total étant égal à 100 % :
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique,
c) de 70 % à 90 %, préférentiellement de 75 % à 85 % d'au moins un monomère qui est un alcoxy ou un hydroxy polyalkylène glycol,
la somme des pourcentages a), b) et c) étant égale à 100 %.

Cette suspension aqueuse est aussi caractérisée en ce que, pour ledit polymère peigne, le monomère a) est préférentiellement l'acide méthacrylique.

Cette suspension aqueuse est aussi caractérisée en ce que, pour ledit polymère peigne, le monomère b) est préférentiellement choisi parmi l'acrylate d'éthyle, l'acrylate de butyle et le méthacrylate de méthyle.

Cette suspension aqueuse est aussi caractérisée en ce que, pour ledit polymère peigne, le monomère c) est un monomère de formule (I) :

R-(A-O)ₘ-(B-O)ₙ-R' (I)

- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

Un autre objet de l'invention réside dans la plaque de plâtre constituée de 2 feuilles de papier et d'un corps résultant du séchage d'une suspension aqueuse moussée de sulfate de calcium hémihydraté contenant un polymère peigne caractérisé en ce qu'il est constitué :
a) d'au moins un monomère qui est l'acide (méth)acrylique,
b) d'au moins un monomère qui est un ester de l'acide (méth)acrylique,
c) d'au moins un monomère qui est un alcoxy ou un hydroxy polyalkylène glycol.

Cette plaque de plâtre est aussi caractérisée en ce que ledit polymère peigne est constitué, exprimé en pourcentage en poids de chacun de ses constituants, le total étant égal à 100 % :
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique,
c) de 70 % à 90 %, préférentiellement de 75 % à 85 % d'au moins un monomère qui est un alcoxy ou un hydroxy polyalkylène glycol,

la somme des pourcentages a), b) et c) étant égale à 100 %.

Cette plaque de plâtre est aussi caractérisée en ce que, pour ledit polymère peigne, le monomère a) est préférentiellement l'acide méthacrylique.

Cette plaque de plâtre est aussi caractérisée en ce que, pour ledit polymère peigne, le monomère b) est préférentiellement choisi parmi l'acrylate d'éthyle, l'acrylate de butyle et le méthacrylate de méthyle.

Cette plaque de plâtre est aussi caractérisée en ce que, pour ledit polymère peigne, le monomère c) est un monomère de formule (I) :

R-(A-O)ₘ-(B-O)ₙ-R' (I)

- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

Les exemples suivants illustrent la présente Demande, sans toutefois en limiter la portée.

### EXEMPLES

Dans tous les exemples, le poids moléculaire des polymères mis en oeuvre est déterminé selon la méthode explicitée ci-dessous, par chromatographie d'exclusion stérique à multi-détection (CES 3D).

La chaîne de CES 3D est composée comme suit :
- dégazeur en ligne pour phase mobile ERC 3112
- pompe isocratique de type Waters 515 ou Viscotek VE1121
- injecteur automatique Waters 717+
- four pour colonnes Waters CHM
- jeu de 3 colonnes Waters Ultrahydrogel de longueur 30 cm et diamètre interne 7,8mm 1 colonne linéaire suivie de 2 colonnes 120 Å, l'ensemble étant précédé par une colonne de garde de même nature
- ensemble de détecteurs connectés en parallèle : Viscotek T60A combinant LS et viscosimétrie et réfractomètre différentiel Waters 2410
- système informatique et logiciel : Viscotek TriSEC 3.0 GPC software

Composition de la phase mobile :
- préparation d'une solution mère : Na2S04 666 mM, filtrée à 0,1 µm
- préparation de la phase mobile à 66,6 mM en Na₂SO₄ (soit une force ionique de 0,2M)
   - 10 % en volume de la solution mère précédente
   - 5 % en volume d'acétonitrile
   - 85 % en volume d'eau à 18,2 MΩ
   - pH ajusté à 9,0 par quelques gouttes de soude N

Paramètres opérationnels
- débit : 0,8 ml/min
- température des colonnes et du réfractomètre : 40°C
- volume d'injection : 100 µl
- concentration en polymère à l'injection : 2 à 4 mg/ml en fonction de la masse molaire moyenne attendue pour chaque échantillon (optimisation des réponses des détecteurs)
- durée d'analyse : 50 min

### Etalonnage des détecteurs :

Utilisation de deux étalons certifiés :
   - Viscotek PEO22k, étalon de faible indice de polymolécularité (Ip) pour étalonnage proprement dit du système,
   - Viscotek Dextran T70k, étalon de fort indice (Ip) pour vérification et affinage de l'étalonnage.

Dans les tests qui suivent, on a tout d'abord réalisé une suspension aqueuse de sulfate de calcium hémihydraté, en présence d'un polymère selon l'art antérieur ou selon l'invention, dont on a ensuite déterminé la « fluidité ». Cette fluidité s'exprime à travers le pourcentage de réduction d'eau qu'on peut réaliser dans ladite suspension, en vue de maintenir sa fluidité constante et ce, pour un taux de dispersant donné (c'est-à-dire qu'on parvient, pour ce taux de dispersant, à diminuer la quantité d'eau dans la suspension, tout en maintenant sa viscosité à une certaine valeur). Ce pourcentage a été déterminé pour un taux de dispersant fixé arbitrairement à 0,3 % en poids de polymère sec par rapport au poids sec de sulfate de calcium hémihydraté. Plus ce pourcentage est important, meilleur est le pouvoir dispersant du polymère considéré.

Dans un deuxième temps, au moyen d'une procédure particulière, on a simulé les conditions expérimentales de la mise en contact de la suspension obtenue précédemment, avec de la mousse. La capacité de chaque polymère à stabiliser la mousse a été déterminée à travers une mesure de densité du mélange formé par la suspension et la mousse. Plus cette densité est faible, meilleur est le pouvoir anti-démoussant pour le polymère considéré.

### 1. Mesure du pourcentage de réduction d'eau :

La mesure du pourcentage de réduction d'eau en fonction de la dose de dispersant est réalisée par fabrication d'une dispersion d'hémihydrate de calcium de viscosité constante. Cette viscosité constante est maintenue en réduisant la quantité d'eau utilisée pour compenser la baisse de viscosité due à l'augmentation de la dose de dispersant. La méthode utilisée est la suivante.

### 1.1 Détermination de la quantité d'eau nécessaire en l'absence de dispersant :

Dans un bécher de 250 ml, on pèse 37 g d'eau, on ajoute 50 g d'hémihydrate du sulfate de calcium, et on laisse reposer 60 secondes pour mouiller la poudre. On agite soigneusement 30 secondes au moyen d'une spatule et on verse la dispersion obtenue sur une plaque de verre. Le bord du bécher doit se trouver à environ 90 mm de la plaque.

On mesure le diamètre de la galette de plâtre ainsi formée qui doit être de 90 mm. Si le diamètre de la galette est supérieur à 90 mm, on refait un essai en diminuant la quantité d'eau utilisée ; dans le cas contraire, on refait l'essai en augmentant la quantité d'eau. La quantité d'eau utilisée pour obtenir une galette de 90 mm est la valeur de référence utilisée pour la suite des essais.

### 1.2 Détermination du pourcentage de réduction d'eau en fonction de la dose de dispersant utilisée :

La procédure précédente est utilisée en ajoutant une quantité définie de dispersant dans l'eau de gâchage du sulfate de calcium hémihydraté. La quantité de dispersant est calculée pour réaliser des essais à 0,3 % de dispersant exprimé en matière sèche par rapport à l'hémihydrate du sulfate de calcium. Pour chaque dose de dispersant, la quantité d'eau est ajustée au moyen d'essais successifs pour obtenir une galette de 90 mm de diamètre. Les résultats sont exprimés en pourcentage de réduction d'eau (par rapport à l'essai sans dispersant) en fonction du pourcentage de dispersant calculé en matière sèche par rapport à l'hémihydrate du sulfate de calcium.

### 2. Mesure de la densité de la suspension aqueuse moussée de sulfate de calcium hémihydraté :

La mesure de la densité de la suspension aqueuse de gypse moussé est réalisée par la fabrication simultanée, au moyen de 2 mélangeurs à moteur, de la dispersion de sulfate de calcium hémihydraté et de la mousse. Ces 2 formulations sont ensuite mélangées et la densité d'un volume fixe du mélange est aussitôt mesurée par pesée.

### 2.1 Préparation de la mousse :

On utilise un mélangeur Hamilton Beach ou matériel équivalent, muni de son bol en acier inoxydable d'un volume d'environ 900 ml. Dans le bol on pèse 130 g d'eau puis 0,2 g d'agent moussant (Steol™ FA 406 de la société STEPAN™), l'agitation de l'Hamilton Beach est alors mise en route pour une durée d'une minute à la vitesse 3, minute pendant laquelle la dispersion de sulfate de calcium hémihydraté est préparée afin que les deux formulations soient prêtes en même temps.

### 2.2 Préparation de la dispersion d'hémihydrate du sulfate de calcium :

On utilise un mélangeur du type Waring Professional Food & Beverage Blender MBB518, muni d'un bol de mélange de 1 litre, ou un matériel équivalent. Dans le bol de mélange, on pèse 193 g d'eau, 0,2 g en poids sec de polymère et on mélange soigneusement. On ajoute alors rapidement 407 g de sulfate de calcium hémihydraté et on mélange au moyen du moteur pendant 7 secondes à une vitesse d'environ 21 000 tours/min.

### 2.3 Réalisation du mélange des deux formulations et mesure de la densité :

Les deux formulations sont ajoutées simultanément dans un mélangeur planétaire du type Kenwood Chef Classic ou matériel équivalent, muni d'un batteur du type K en fonctionnement et mélangées pendant un temps très court de 20 secondes, et à très faible vitesse c'est-à-dire à 50 tours/min. Le mélange obtenu est alors utilisé pour remplir un bécher en verre de 300 ml de volume total qui est arasé puis pesé. Une masse nette de 300 g indiquera donc une densité de 1,00.

### Essai n° 1

Cet essai illustre l'art antérieur et met en oeuvre un polynaphtalène sulfonate commercialisé par la société GEO SPECIALTY CHEMICALS™ (Horsham, PA) sous le nom Diloflow™ GW.

### Essai n° 2

Cet essai illustre l'art antérieur et met en oeuvre un polymère de masse moléculaire en poids égale à 75 000 g/mol, totalement neutralisé par la soude, et constitué de, exprimé en pourcentage en poids de chacun de ses constituants :
- 12,5 % d'acide méthacrylique,
- 87,5 % en poids d'un monomère de formule (I) dans laquelle R représente le groupe méthacrylate, R' représente l'hydrogène, m = 46, n = 15, AO désigne l'oxyde d'éthylène et BO désigne l'oxyde de propylène, les motifs (AO) et (BO) ayant une répartition statistique.

### Essai n° 3

Cet essai illustre l'art antérieur et met en oeuvre un polymère de masse moléculaire en poids égale à 60 000 g/mol, totalement neutralisé par la soude, et constitué de, exprimé en pourcentage en poids de chacun de ses constituants :
- 20,0 % d'acide méthacrylique,
- 80,0 % en poids d'un monomère de formule (I) dans laquelle R représente le groupe méthacrylate, R' représente l'hydrogène, m = 46, n = 15, AO désigne l'oxyde d'éthylène et BO désigne l'oxyde de propylène, noté monomère spécial n° 1.

### Essai n° 4

Cet essai illustre l'invention et met en oeuvre un polymère de masse moléculaire en poids égale à 40 000 g/mol, totalement neutralisé par la soude, et constitué de, exprimé en pourcentage en poids de chacun de ses constituants :
- 19,3 % d'acide méthacrylique,
- 2,8 % d'acrylate d'éthyle,
- 77,9 % en poids du monomère spécial n° 1.

### Essai n° 5

Cet essai illustre l'invention et met en oeuvre un polymère de masse moléculaire en poids égale à 35 000 g/mol, totalement neutralisé par la soude, et constitué de, exprimé en pourcentage en poids de chacun de ses constituants :
- 19,3 % d'acide méthacrylique,
- 5,6 % d'acrylate d'éthyle,
- 75,1 % en poids du monomère spécial n° 1.

### Essai n° 6

Cet essai illustre l'invention et met en oeuvre un polymère de masse moléculaire en poids égale à 37 000 g/mol, totalement neutralisé par la soude, et constitué de, exprimé en pourcentage en poids de chacun de ses constituants :
- 19,3 % d'acide methacrylique,
- 2,8 % d'acrylate de butyle,
- 77,9 % en poids du monomère spécial n° 1.

### Essai n° 7

Cet essai illustre l'invention et met en oeuvre un polymère de masse moléculaire en poids égale à 44 500 g/mol, totalement neutralisé par la soude, et constitué de, exprimé en pourcentage en poids de chacun de ses constituants :
- 19,3 % d'acide méthacrylique,
- 5,6 % d'acrylate de butyle,
- 75,1 % en poids du monomère spécial n° 1.

### Essai n° 8

Cet essai illustre l'invention et met en oeuvre un polymère de masse moléculaire en poids égale à 38 000 g/mol, totalement neutralisé par la soude, et constitué de, exprimé en pourcentage en poids de chacun de ses constituants :
- 19,3 % d'acide méthacrylique,
- 2,8 % de méthacrylate de méthyle,
- 77,9 % en poids du monomère spécial n° 1.

### Essai n° 9

Cet essai illustre l'invention et met en oeuvre un polymère de masse moléculaire en poids égale à 45 000 g/mol, totalement neutralisé par la soude, et constitué de, exprimé en pourcentage en poids de chacun de ses constituants :
- 19,3 % d'acide méthacrylique,
- 5,6 % de méthacrylate de méthyle,
- 75,1 % en poids du monomère spécial n° 1.

### Essai n° 10

Cet essai illustre l'invention et met en oeuvre un polymère de masse moléculaire en poids égale à 32 000 g/mol, totalement neutralisé par la soude, et constitué de, exprimé en pourcentage en poids de chacun de ses constituants :
- 19,8 % d'acide acrylique,
- 1,0 % de méthacrylate d'alkyle consistant en un mélange de 2 groupements ayant respectivement 12 et 14 atomes de carbone,
- 79,2 % en poids du monomère spécial n° 1.

### Essai n° 11

Cet essai illustre l'invention et met en oeuvre un polymère de masse moléculaire en poids égale à 32 000 g/mol, totalement neutralisé par la soude, et constitué de, exprimé en pourcentage en poids de chacun de ses constituants :
- 19,8 % d'acide acrylique,
- 5,0 % de méthacrylate d'alkyle consistant en un mélange de 2 groupements ayant respectivement 12 et 14 atomes de carbone,
- 75,2 % en poids du monomère spécial n° 1.

Les résultats obtenus apparaissent dans le tableau 1.

**Tableau 1**

| Art Antérieur (AA) / INvention (IN) | Essai n° | % réduction d'eau | Densité de la suspension moussée |
|---|---|---|---|
| AA | 1 | 9,7 | 0,968 |
| AA | 2 | 17,2 | 1,166 |
| AA | 3 | 17,5 | 1,140 |
| IN | 4 | 19,2 | 1,008 |
| IN | 5 | 20,3 | 1,005 |
| IN | 6 | 20,3 | 1,037 |
| IN | 7 | 21,9 | 1,021 |
| IN | 8 | 21,1 | 1,016 |
| IN | 9 | 19,7 | 0,989 |
| IN | 10 | 18,1 | 1,040 |
| IN | 11 | 19,1 | 1,004 |

Si on observe dans un premier temps les résultats obtenus pour les deux produits de l'art antérieur, on constate sans surprise que les polymères peignes selon les essais n° 2 et 3 sont des bien meilleurs dispersants que le naphtalène sulfonate selon l'essai n° 1. En revanche, contrairement à ce qu'enseigne l'état de la technique, les polymères peignes s'avèrent être des agents qui déstructurent la mousse de manière très importante, par rapport au naphtalène sulfonate.

Ces résultats contredisent les observations faites dans les documents JP 08-217505 et US 6 264 739. Comme déjà indiqué, ces brevets mettent en oeuvre un protocole opératoire très éloigné de la réalité, en ce qui concerne la fabrication de la suspension moussée de gypse. Il n'est donc pas étonnant que leurs résultats soient aujourd'hui démentis : la Demanderesse, à la lueur des tests qu'elle a réalisé, affirme aujourd'hui que contrairement à ces documents, les polymères peignes ne stabilisent pas forcément mieux la mousse que le naphtalène sulfonate.

Si on observe maintenant les résultats obtenus avec les polymères selon l'invention, on constate tout d'abord que le pouvoir dispersant de ces produits n'est en rien altéré par la présence d'un ester acrylique : au contraire, il est même légèrement amélioré. Ensuite, il apparaît que la mousse est bien moins déstructurée qu'avec le polymère peigne de l'art antérieur qui ne contient pas d'ester acrylique : on obtient des valeurs de densité de la suspension aqueuse moussée du même ordre de grandeur que pour le naphtalène sulfonate.

## Revendications

1. Utilisation dans une suspension aqueuse moussée de sulfate de calcium hémihydraté, comme agent dispersant et anti-démoussant, d'un polymère peigne **caractérisé en ce qu'**il est constitué :
a) d'au moins un monomère qui est l'acide (méth)acrylique,
b) d'au moins un monomère qui est un ester de l'acide (méth)acrylique,
c) d'au moins un monomère qui est un alcoxy ou un hydroxy polyalkylène glycol.

2. utilisation selon la revendication 1, **caractérisée en ce que** ledit polymère peigne est constitué, exprimé en pourcentage en poids de chacun de ses constituants, le total étant égal à 100 % :
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique,
c) de 70 % à 90 %, préférentiellement de 75 % à 85 % d'au moins un monomère qui est un alcoxy ou un hydroxy polyalkylène glycol,
la somme des pourcentages a), b) et c) étant égale à 100 %.

3. Utilisation selon la revendication 2, **caractérisée en ce que** le monomère a) est préférentiellement l'acide méthacrylique.

4. Utilisation selon la revendication 2, **caractérisée en ce que** le monomère b) est préférentiellement choisi parmi l'acrylate d'éthyle, l'acrylate de butyle et le méthacrylate de méthyle.

5. Utilisation selon la revendication 2, **caractérisée en ce que** le monomère c) est un monomère de formule (I) :
R-(A-O)ₘ-(B-O)ₙ-R' (I)
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

6. Utilisation selon l'une des revendications 1 à 5, **caractérisée en ce que** ledit polymère est obtenu par polymérisation radicalaire en solution, en émulsion directe ou inverse, en suspension ou précipitation dans des solvants, en présence de systèmes catalytiques et d'agents de transfert, ou encore en une polymérisation radicalaire contrôlée et préférentiellement en la polymérisation contrôlée par des nitroxydes (NMP) ou par des cobaloxymes, en la polymérisation par transfert d'atome radicalaire (ATRP), en la polymérisation radicalaire contrôlée par des dérivés soufrés, choisis parmi des carbamates, des dithioesters ou des trithiocarbonates (RAFT) ou des xanthates.

7. Utilisation selon l'une des revendications 1 à 6, **caractérisée en ce que** ledit polymère est totalement ou partiellement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est choisi parmi la triéthanolamine et l'hydroxyde de sodium.

8. Utilisation selon l'une des revendications 1 à 7, **caractérisée en ce que** ledit polymère est séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

9. Utilisation selon l'une des revendications 1 à 8, **caractérisée en ce que** la suspension aqueuse moussée de sulfate de calcium hémihydraté contient, exprimé en pourcentage en poids sec de polymère par rapport au poids sec de gypse, de 0,005 % à 0,5 %, préférentiellement de 0,02 % à 0,35 % dudit polymère.

10. Suspension aqueuse moussée de sulfate de calcium hémihydraté, contenant un polymère peigne **caractérisé en ce qu'**il est constitué:
a) d'au moins un monomère qui est l'acide (méth)acrylique,
b) d'au moins un monomère qui est un ester de l'acide (méth)acrylique, choisi parmi l'acrylate d'éthyle, l'acrylate de butyle et le méthacrylate de méthyle,
c) d'au moins un monomère qui est un alcoxy ou un hydroxy polyalkylène glycol.

11. Suspension aqueuse selon la revendication 10, **caractérisée en ce que** ledit polymère peigne est constitué, exprimé en pourcentage en poids de chacun de ses constituants, le total étant égal à 100 % :
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique, choisi parmi l'acrylate d'éthyle, l'acrylate de butyle et le méthacrylate de méthyle,
c) de 70 % à 90 %, préférentiellement de 75 % à 85 % d'au moins un monomère qui est un alcoxy ou un hydroxy polyalkylène glycol,
la somme des pourcentages a), b) et c) étant égale à 100 %.

12. Suspension aqueuse selon la revendication 10, **caractérisée en ce que**, pour ledit polymère peigne, le monomère a) est préférentiellement l'acide méthacrylique.

13. Suspension aqueuse selon la revendication 10, **caractérisée en ce que**, pour ledit polymère peigne, le monomère c) est un monomère de formule (I) :
R-(A-O)ₘ-(B-O)ₙ-R' (I)
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

14. Plaque de plâtre constituée de 2 feuilles de papier et d'un corps résultant du séchage d'une suspension aqueuse moussée de sulfate de calcium hémihydraté contenant un polymère peigne **caractérisé en ce qu'**il est constitué :
a) d'au moins un monomère qui est l'acide (méth)acrylique,
b) d'au moins un monomère qui est un ester de l'acide (méth)acrylique, choisi parmi l'acrylate d'éthyle, l'acrylate de butyle et le méthacrylate de méthyle,
c) d'au moins un monomère qui est un alcoxy ou un hydroxy polyalkylène glycol.

15. Plaque de plâtre selon la revendication 14, **caractérisée en ce que** ledit polymère peigne est constitué, exprimé en pourcentage en poids de chacun de ses constituants, le total étant égal à 100 % :
a) de 5 % à 30 %, préférentiellement de 15 % à 25 % d'au moins un monomère qui est l'acide (méth)acrylique,
b) de 1 % à 20 %, préférentiellement de 5 % à 10 % d'au moins un monomère qui est un ester de l'acide (méth)acrylique, choisi parmi l'acrylate d'éthyle, l'acrylate de butyle et le méthacrylate de méthyle,
c) de 70 % à 90 %, préférentiellement de 75 % à 85 % d'au moins un monomère qui est un alcoxy ou un hydroxy polyalkylène glycol,
la somme des pourcentages a), b) et c) étant égale à 100 %.

16. Plaque de plâtre selon la revendication 15, **caractérisée en ce que**, pour ledit polymère peigne, le monomère a) est préférentiellement l'acide méthacrylique.

17. Plaque de plâtre selon la revendication 15, **caractérisée en ce que**, pour ledit polymère peigne, le monomère c) est un monomère de formule (I) :
R-(A-O)ₘ-(B-O)ₙ-R' (I)
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' représente l'hydrogène ou un groupement alkyle ayant de 1 à 4 atomes de carbone, et préférentiellement l'hydrogène.

## Patentansprüche

1. Verwendung eines Kammpolymers, das **dadurch gekennzeichnet ist, dass** es aus:
a) mindestens einem Monomer, bei dem es sich um (Meth)acrylsäure handelt,
b) mindestens einem Monomer, bei dem es sich um einen Ester von (Meth)acrylsäure handelt,
c) mindestens einem Monomer, bei dem es sich um ein Alkoxy- oder Hydroxypolyalkylenglykol handelt,
besteht, in einer aufgeschäumten wässrigen Suspension von Calciumsulfathemihydrat als Dispergier- und Antientschäumungsmittel.

2. Verwendung nach Anspruch 1, **dadurch gekennzeichnet, dass** das Kammpolymer, ausgedrückt als Gewichtsprozentanteil jedes seiner Bestandteile, wobei die Summe gleich 100% ist, aus:
a) 5% bis 30%, vorzugsweise 15% bis 25%, mindestens eines Monomers, bei dem es sich um (Meth)acrylsäure handelt,
b) 1% bis 20%, vorzugsweise 5% bis 10%, mindestens eines Monomers, bei dem es sich um einen Ester von (Meth)acrylsäure handelt,
c) 70% bis 90%, vorzugsweise 75% bis 85%, mindestens eines Monomers, bei dem es sich um ein Alkoxy- oder Hydroxypolyalkylenglykol handelt,
besteht, wobei die Summe der Prozentanteile a), b) und c) gleich 100% ist.

3. Verwendung nach Anspruch 2, **dadurch gekennzeichnet, dass** es sich bei dem Monomer a) vorzugsweise um Methacrylsäure handelt.

4. Verwendung nach Anspruch 2, **dadurch gekennzeichnet, dass** das Monomer b) vorzugsweise aus Ethylacrylat, Butylacrylat und Methylmethacrylat ausgewählt ist.

5. Verwendung nach Anspruch 2, **dadurch gekennzeichnet, dass** es sich bei dem Monomer c) um ein Monomer der Formel (I) handelt:
R-(A-O)ₘ-(B-O)ₙ-R' (I)
- m und n ganze Zahlen kleiner 150 sind, von denen mindestens eine nicht null ist,
- A und B für voneinander verschiedene Alkylgruppen mit 2 bis 4 Kohlenstoffatomen stehen, wobei die Gruppe AO vorzugsweise für Ethylenoxid steht und die Gruppe BO vorzugsweise für Propylenoxid steht,
- R für eine polymerisierbare ungesättigte Funktion steht,
- R' für Wasserstoff oder eine Alkylgruppe mit 1 bis 4 Kohlenstoffatomen und vorzugsweise Wasserstoff steht.

6. Verwendung nach einem der Ansprüche 1 bis 5, **dadurch gekennzeichnet, dass** das Polymer durch radikalische Polymerisation in Lösung, in direkter oder inverser Emulsion, in Suspension oder mit Fällung in Lösungsmitteln in Gegenwart von katalytischen Systemen und Kettenübertragungsmitteln oder auch durch kontrollierte radikalische Polymerisation und vorzugsweise durch Polymerisation, die mit Nitroxiden (NMP) oder mit Cobaloximen kontrolliert wird, durch radikalische Atomtransferpolymerisation (ATRP), durch radikalische Polymerisation, die mit Schwefelderivaten, die aus Carbamaten, Dithioestern oder Trithiocarbonaten (RAFT) oder Xanthogenaten ausgewählt sind, kontrolliert wird, erhalten wird.

7. Verwendung nach einem der Ansprüche 1 bis 6, **dadurch gekennzeichnet, dass** das Polymer ganz oder teilweise durch ein oder mehrere Neutralisationsmittel, die über ein einwertiges oder mehrwertiges Kation verfügen, neutralisiert wird, wobei die Mittel vorzugsweise aus wässrigem Ammoniak oder aus den Hydroxiden und/oder Oxiden von Calcium und Magnesium oder aus den Hydroxiden von Natrium, Kalium und Lithium oder aus den aliphatischen und/oder cyclischen primären, sekundären oder tertiären Aminen wie vorzugsweise Stearylamin, den Ethanolaminen (Mono-, Di-, Triethanolamin), Mono- und Diethylamin, Cyclohexylamin, Methylcyclohexylamin, Aminomethylpropanol und Morpholin ausgewählt werden, und vorzugsweise dadurch, dass das Neutralisationsmittel aus Triethanolamin und Natriumhydroxid ausgewählt wird.

8. Verwendung nach einem der Ansprüche 1 bis 7, **dadurch gekennzeichnet, dass** das Polymer gemäß statischen oder dynamischen Verfahren mit einem oder mehreren polaren Lösungsmitteln, vorzugsweise aus der Gruppe bestehend aus Wasser, Methanol, Ethanol, Propanol, Isopropanol, den Butanolen, Aceton, Tetrahydrofuran oder deren Mischungen, in mehrere Phasen aufgetrennt wird.

9. Verwendung nach einem der Ansprüche 1 bis 8, **dadurch gekennzeichnet, dass** die aufgeschäumte wässrige Suspension von Calciumsulfathemihydrat, ausgedrückt als Trockengewichtsprozentanteil von Polymer, bezogen auf das Trockengewicht von Gips, 0,005% bis 0,5%, vorzugsweise 0,02% bis 0,35%, des Polymers enthält.

10. Aufgeschäumte wässrige Suspension von Calciumsulfathemihydrat, enthaltend ein Kammpolymer, das **dadurch gekennzeichnet ist, dass** es aus:
a) mindestens einem Monomer, bei dem es sich um (Meth)acrylsäure handelt,
b) mindestens einem Monomer, bei dem es sich um einen Ester von (Meth)acrylsäure handelt, der aus Ethylacrylat, Butylacrylat und Methylmethacrylat ausgewählt ist,
c) mindestens einem Monomer, bei dem es sich um ein Alkoxy- oder Hydroxypolyalkylenglykol handelt,
besteht.

11. Wässrige Suspension nach Anspruch 10, **dadurch gekennzeichnet, dass** das Kammpolymer, ausgedrückt als Gewichtsprozentanteil jedes seiner Bestandteile, wobei die Summe gleich 100% ist, aus:
a) 5% bis 30%, vorzugsweise 15% bis 25%, mindestens eines Monomers, bei dem es sich um (Meth)acrylsäure handelt,
b) 1% bis 20%, vorzugsweise 5% bis 10%, mindestens eines Monomers, bei dem es sich um einen Ester von (Meth)acrylsäure handelt, der aus Ethylacrylat, Butylacrylat und Methylmethacrylat ausgewählt ist,
c) 70% bis 90%, vorzugsweise 75% bis 85%, mindestens eines Monomers, bei dem es sich um ein Alkoxy- oder Hydroxypolyalkylenglykol handelt,
besteht, wobei die Summe der Prozentanteile a), b) und c) gleich 100% ist.

12. Wässrige Suspension nach Anspruch 10, **dadurch gekennzeichnet, dass** es sich für das Kammpolymer bei dem Monomer a) vorzugsweise um Methacrylsäure handelt.

13. Wässrige Suspension nach Anspruch 10, **dadurch gekennzeichnet, dass** es sich für das Kammpolymer bei dem Monomer c) um ein Monomer der Formel (I) handelt:
R-(A-O)ₘ-(B-O)ₙ-R' (I)
- m und n ganze Zahlen kleiner 150 sind, von denen mindestens eine nicht null ist,
- A und B für voneinander verschiedene Alkylgruppen mit 2 bis 4 Kohlenstoffatomen stehen, wobei die Gruppe AO vorzugsweise für Ethylenoxid steht und die Gruppe BO vorzugsweise für Propylenoxid steht,
- R für eine polymerisierbare ungesättigte Funktion steht,
- R' für Wasserstoff oder eine Alkylgruppe mit 1 bis 4 Kohlenstoffatomen und vorzugsweise Wasserstoff steht.

14. Gipsplatte aus 2 Blättern Papier und einem Körper, erhalten durch Trocknen einer aufgeschäumten wässrigen Suspension von Calciumsulfathemihydrat, die ein Kammpolymer enthält, das **dadurch gekennzeichnet ist, dass** es aus:
a) mindestens einem Monomer, bei dem es sich um (Meth)acrylsäure handelt,
b) mindestens einem Monomer, bei dem es sich um einen Ester von (Meth)acrylsäure handelt, der aus Ethylacrylat, Butylacrylat und Methylmethacrylat ausgewählt ist,
c) mindestens einem Monomer, bei dem es sich um ein Alkoxy- oder Hydroxypolyalkylenglykol handelt,
besteht.

15. Gipsplatte nach Anspruch 14, **dadurch gekennzeichnet, dass** das Kammpolymer, ausgedrückt als Gewichtsprozentanteil jedes seiner Bestandteile, wobei die Summe gleich 100% ist, aus:
a) 5% bis 30%, vorzugsweise 15% bis 25%, mindestens eines Monomers, bei dem es sich um (Meth)acrylsäure handelt,
b) 1% bis 20%, vorzugsweise 5% bis 10%, mindestens eines Monomers, bei dem es sich um einen Ester von (Meth)acrylsäure handelt, der aus Ethylacrylat, Butylacrylat und Methylmethacrylat ausgewählt ist,
c) 70% bis 90%, vorzugsweise 75% bis 85%, mindestens eines Monomers, bei dem es sich um ein Alkoxy- oder Hydroxypolyalkylenglykol handelt,
besteht, wobei die Summe der Prozentanteile a), b) und c) gleich 100% ist.

16. Gipsplatte nach Anspruch 15, **dadurch gekennzeichnet, dass** es sich für das Kammpolymer bei dem Monomer a) vorzugsweise um Methacrylsäure handelt.

17. Gipsplatte nach Anspruch 15, **dadurch gekennzeichnet, dass** es sich für das Kammpolymer bei dem Monomer c) um ein Monomer der Formel (I) handelt:
R-(A-O)ₘ-(B-O)ₙ-R' (I)
- m und n ganze Zahlen kleiner 150 sind, von denen mindestens eine nicht null ist,
- A und B für voneinander verschiedene Alkylgruppen mit 2 bis 4 Kohlenstoffatomen stehen, wobei die Gruppe AO vorzugsweise für Ethylenoxid steht und die Gruppe BO vorzugsweise für Propylenoxid steht,
- R für eine polymerisierbare ungesättigte Funktion steht,
- R' für Wasserstoff oder eine Alkylgruppe mit 1 bis 4 Kohlenstoffatomen und vorzugsweise Wasserstoff steht.

## Claims

1. Use in a foamy aqueous suspension of calcium sulfate hemihydrate, as dispersing and anti-defoaming agent, of a comb polymer **characterized in that** it is made up:
a) of at least one monomer which is (meth)acrylic acid,
b) of at least one monomer which is an ester of (meth)acrylic acid,
c) of at least one monomer which is an alkoxy or a hydroxy polyalkylene glycol.

2. Use according to claim 1, **characterized in that** said comb polymer is made up, expressed as a percentage by weight of each of its constituents, the total being equal to 100 %:
a) from 5% to 30%, preferentially from 15% to 25% of at least one monomer which is (meth)acrylic acid,
b) from 1% to 20%, preferentially from 5% to 10% of at least one monomer which is an ester of (meth)acrylic acid,
c) from 70% to 90%, preferentially from 75% to 85% of at least one monomer which is an alkoxy or a hydroxy polyalkylene glycol,
the sum of percentages a), b) and c) being equal to 100%.

3. Use according to claim 2, **characterized in that** monomer a) is preferentially methacrylic acid.

4. Use according to claim 2, **characterized in that** monomer b) is preferentially chosen from among ethyl acrylate, butyl acrylate and methyl methacrylate.

5. Use according to claim 2, **characterized in that** monomer c) is a monomer with formula (I):
R-(A-O)ₘ-(B-O)ₙ-R' (I)
- m and n are integers less than 150, at least one of which is non zero,
- A and B designate alkyl groups which are different from one another, and having 2 to 4 carbon atoms, the group AO preferentially designating ethylene oxide and the group BO preferentially designating propylene oxide,
- R designates a polymerizable unsaturated function,
- R' represents hydrogen or an alkyl group having 1 to 4 carbon atoms, and preferentially hydrogen.

6. Use according to one of claims 1 to 5, **characterized in that** said polymer is obtained by radical polymerization in solution, in direct or reverse emulsion, in suspension or precipitation in solvents, in the presence of catalytic systems and transfer agents, or also in controlled radical polymerization, and preferentially in nitroxide-mediated polymerization (NMP) or by cobaloximes, in atom transfer radical polymerization (ATRP), in sulfur derivative-mediated radical polymerization, said derivatives being chosen from among carbamates, dithioesters or trithiocarbonates (RAFT) or xanthates.

7. Use according to one of claims 1 to 6, **characterized in that** said copolymer is fully or partially neutralized by one or more neutralization agents having a monovalent or polyvalent cation, said agents preferentially being chosen from among ammonia or from among calcium or magnesium hydroxides and/or oxides, or from among sodium, potassium, or lithium hydroxides, or from among aliphatic and/or cyclic primary, secondary, and tertiary amines, preferentially such as stearylamine, ethanolamines (mono-, di-triethanolamine), mono and diethylamine, cyclohexylamine, methylcyclohexylamine, amino methyl propanol, morpholine, and preferentially **in that** the neutralization agent is chosen from among triethanolomine and sodium hydroxide.

8. Use according to one of claims 1 to 7, **characterized in that** said polymer is separated into several phases, using static or dynamic processes, by one or more polar solvents preferentially belonging to the group made up of water, methanol, ethanol, propanol, isopropanol, butanols, acetone, tetrahydrofuran or mixtures thereof.

9. Use according to one of claims 1 to 8, **characterized in that** the foamy aqueous suspension of calcium sulfate hemihydrate contains, expressed as a percentage by dry weight of polymer in relation to the dry weight of gypsum, from 0.005% to 0.5%, preferentially from 0.02% to 0.35% of said polymer.

10. Foamy aqueous suspension of calcium sulfate hemihydrate, containing a comb polymer **characterized in that** it is made up:
a) of at least one monomer which is (meth)acrylic acid,
b) of at least one monomer which is an ester of (meth)acrylic acid, chosen from among ethyl acrylate, butyl acrylate, and methyl methacrylate,
c) of at least one monomer which is an alkoxy or a hydroxy polyalkylene glycol.

11. Aqueous suspension according to claim 10, **characterized in that** said comb polymer is made up, expressed as a percentage by weight of each of its constituents, the total being equal to 100 % of:
a) from 5% to 30%, preferentially from 15% to 25% of at least one monomer which is (meth)acrylic acid,
b) from 1% to 20%, preferentially from 5% to 10% of at least one monomer which is an ester of (meth)acrylic acid, chosen from among ethyl acrylate, butyl acrylate, and methyl methacrylate,
c) from 70% to 90%, preferentially from 75% to 85% of at least one monomer which is an alkoxy or a hydroxy polyalkylene glycol,
the sum of percentages a), b) and c) being equal to 100%.

12. Aqueous suspension according to claim 10, **characterized in that**, for said comb polymer, monomer a) is preferentially methacrylic acid.

13. Aqueous suspension according to claim 10, **characterized in that**, for said comb polymer, monomer c) is a monomer with formula (I):
R-(A-O)ₘ-(B-O)ₙ-R' (I)
- m and n are integers less than 150, at least one of which is non zero,
- A and B designate alkyl groups which are different from one another, and having 2 to 4 carbon atoms, the group AO preferentially designating ethylene oxide and the group BO preferentially designating propylene oxide,
- R designates a polymerizable unsaturated function,
- R' represents hydrogen or an alkyl group having 1 to 4 carbon atoms, and preferentially hydrogen.

14. Plasterboard made up of 2 sheets of paper and a body resulting from the drying of a foamy aqueous suspension of calcium sulfate hemihydrate containing a comb polymer **characterized in that** it is made up:
a) of at least one monomer which is (meth)acrylic acid,
b) of at least one monomer which is an ester of (meth)acrylic acid, chosen from among ethyl acrylate, butyl acrylate, and methyl methacrylate,
c) of at least one monomer which is an alkoxy or a hydroxy polyalkylene glycol.

15. Plasterboard according to claim 14, **characterized in that** said comb polymer is made up, expressed as a percentage by weight of each of its constituents, the total being equal to 100 %:
a) from 5% to 30%, preferentially from 15% to 25% of at least one monomer which is (meth)acrylic acid,
b) from 1% to 20%, preferentially from 5% to 10% of at least one monomer which is an ester of (meth)acrylic acid, chosen from among ethyl acrylate, butyl acrylate, and methyl methacrylate,
c) from 70% to 90%, preferentially from 75% to 85% of at least one monomer which is an alkoxy or a hydroxy polyalkylene glycol,
the sum of percentages a), b) and c) being equal to 100%.

16. Plasterboard according to claim 15, **characterized in that**, for said comb polymer, monomer a) is preferentially methacrylic acid.

17. Plasterboard according to claim 15, **characterized in that**, for said comb polymer, monomer c) is a monomer with formula (I):
R-(A-O)ₘ-(B-O)ₙ-R' (I)
- m and n are integers less than 150, at least one of which is non zero,
- A and B designate alkyl groups which are different from one another, and having 2 to 4 carbon atoms, the group AO preferentially designating ethylene oxide and the group BO preferentially designating propylene oxide,
- R designates a polymerizable unsaturated function,
- R' represents hydrogen or an alkyl group having 1 to 4 carbon atoms, and preferentially hydrogen.
